# EUROPEAN PATENT SPECIFICATION

(11) **EP 4 121 275 B1**
(45) Date of publication and mention of the grant of the patent: **31.07.2024**
(21) Application number: 21713488.1
(22) Date of filing: 05.03.2021
(51) Int. Cl.: B29C 64/165, B29C 64/218, B33Y 30/00

(54) **THREE-DIMENSIONAL OBJECT PRODUCING APPARATUS AND THREE-DIMENSIONAL OBJECT PRODUCING METHOD**
VORRICHTUNG ZUR HERSTELLUNG EINES DREIDIMENSIONALEN OBJEKTS UND VERFAHREN ZUR HERSTELLUNG EINES DREIDIMENSIONALEN OBJEKTS
APPAREIL DE PRODUCTION D'OBJET TRIDIMENSIONNEL ET PROCÉDÉ DE PRODUCTION D'OBJET TRIDIMENSIONNEL

(30) Priority: 18.03.2020 JP 2020047796
(43) Date of publication of application: 25.01.2023
(73) Proprietor: Ricoh Company, Ltd., Tokyo 143-8555 (JP)
(72) Inventor: MATSUMURA, Takashi, Tokyo 143-8555 (JP); NIIMI, Tatsuya, Tokyo 143-8555 (JP); SAITO, Takuya, Tokyo 143-8555 (JP)
(74) Representative: Marks & Clerk LLP
(86) International application number: PCT/JP2021/008721
(87) International publication number: WO 2021/187169

(56) References cited:
- EP-A1- 3 176 648
- WO-A1-2015/056230
- US-A1- 2018 215 079
- US-A1- 2019 240 909

## Description

### [Technical Field]

The present disclosure relates to a three-dimensional object producing apparatus and a three-dimensional object producing method, as disclosed in the appended claims.

### [Background Art]

In recent years, material jetting methods of inkjet-printing images at needed positions of objects using liquid-state photo-curable resins, and laminating such images in multiple layers to produce three-dimensional objects have been developed.

US 2018/215079 A1 shows a three-dimensional object shaping device configured to shape a three-dimensional object using a layer shaping method, the device including: an ejection head configured to eject a shaping material; a flattening roller configured to rotate and move over the shaping material ejected on a layered surface to remove an extra shaping material; and a blade configured to make contact with the flattening roller along a circumferential surface of the flattening roller to scrape off the shaping material adhered to the circumferential surface by rotation of the flattening roller, where chrome plating is coated on the surface of the flattening roller, and the blade is made of carbon tool steel.

In order to improve the object production accuracy, the material jetting methods typically remove any excessive object forming materials discharged through nozzles using tools such as rollers to make the respective layers uniform in thickness (for example, see PTL 1).

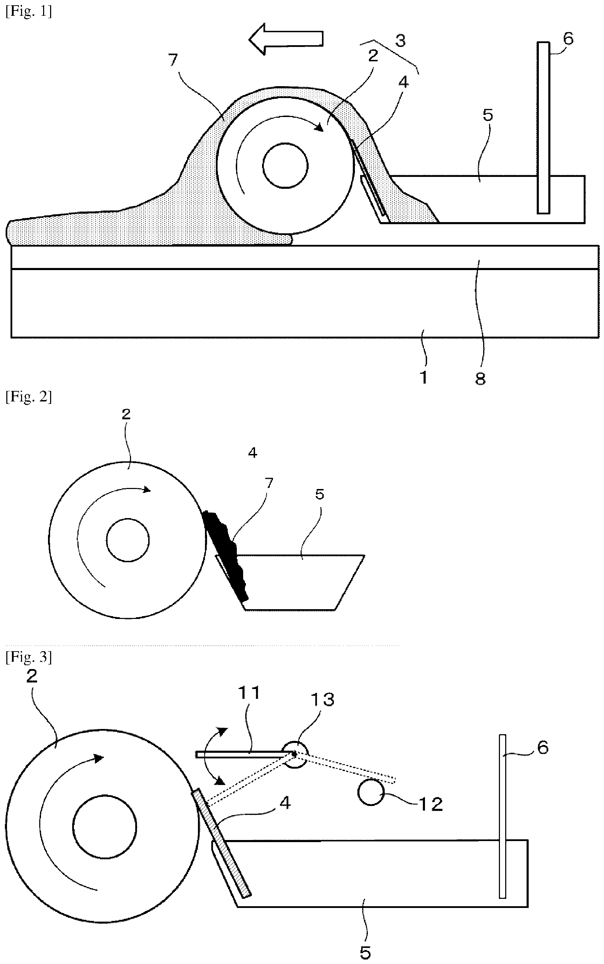

FIG. 1 is a side view of a state where a roller unit 3 removes an excessive object forming material. This example illustrates a state where a roller main body 2 levels the surface of the object forming material discharged over an object production substrate 1 in a flowable state. The roller unit 3 includes the roller main body 2, which is a rotating body, a fixed blade 4 disposed in contact with the surface of the roller main body 2, a receptacle 5 in which the object forming material scraped away by the fixed blade 4 is stored, and a suction pipe 6 through which the object forming material stored in the receptacle 5 is evacuated.

The roller main body 2 is rotated in a reverse rotating direction (a clockwise direction in FIG. 1) from a direction in which a head unit (not illustrated in FIG. 1) travels, and scrapes up a flowable object forming material 7. The object forming material 7 scraped up is conveyed to the fixed blade 4 by attaching to the roller main body 2, and is scraped away by the fixed blade 4 and guided into the receptacle 5. Therefore, the fixed blade 4 is fixed in a posture having a descending gradient toward the receptacle 5. The suction pipe 6 is coupled to a waste liquid path (not illustrated) and suctions the object forming material stored in the receptacle 5 using, for example, a pump, so that the object forming material is stored in a waste liquid tank (not illustrated).

However, the object forming material containing a dryable solvent tends to thicken or gelate over the fixed blade 4 due to drying. Moreover, because radiant light of a UV lamp used for curing or heat in the atmosphere of the apparatus may promote reaction of the object forming material, the object forming material attached on the fixed blade 4 may gradually thicken or cure. Furthermore, when the object forming material that is scraped away includes a model material and a support material, the model material and the support material tend to thicken if the materials mix with each other on the fixed blade 4. This is an obstacle against downward flowing of the object forming material.

In such a roller unit 3, the object forming material 7 that attaches to the fixed blade 4 tends to accumulate as illustrated in FIG. 2 because the object forming material 7 does not sufficiently flow downward into the receptacle 5 but gradually stagnates as a thickened product or a solidified product. As a result, the object forming material in a liquid state overflows along the contact surface between the roller main body 2 and the fixed blade 4 and reaches the side surface of the roller 2. This may contaminate the object surface and generate an object production defect. Moreover, due to degradation of the performance of the fixed blade 4 to scrape away the object forming material attached on the roller 2, the surface of the roller 2 is coated with the object forming material. This may contaminate the object surface and generate an object production defect.

### [Citation List]

### [Patent Literature]

[PTL 1]
Japanese Unexamined Patent Application Publication No. 2013-67116 WO 2019/240909, EP 3176648, and WO 2015/056230 all provide discl osures related to three dimensional printing.

### [Summary of Invention]

### [Technical Problem]

The present disclosure has an object to provide a three-dimensional object producing apparatus that can produce a high-quality three-dimensional object free of a streaky defect and surface contamination.

### [Solution to Problem]

According to a first aspect, there is provided a three-dimensional object producing apparatus according to claim 1. According to a second aspect, there is provided a three-dimensional object producing method according to claim 4. Details of embodiments are provided in the dependent claims According to one aspect of the present disclosure, a three-dimensional object producing apparatus includes a first removing unit configured to remove part of at least one of a model material and a support material, both of which form an object forming layer, a second removing unit configured to scrape away at least one of the model material and the support material attached on the first removing unit, and a third removing unit configured to remove at least one of the model material and the support material attached on the second removing unit.

### [Advantageous Effects of Invention]

The present disclosure can provide a three-dimensional object producing apparatus that can produce a high-quality three-dimensional object free of a streaky defect and surface contamination.

### [Brief Description of Drawings]

[FIG. 1]
   FIG. 1 is a side view illustrating an example of a cleaning mechanism of an existing three-dimensional object producing apparatus, illustrating a state where a roller unit removes an excessive object forming material.
[FIG. 2]
   FIG. 2 is an enlarged view of the roller unit of FIG. 1.
[FIG. 3]
   FIG. 3 is a schematic view illustrating an example of a cleaning mechanism of a three-dimensional object producing apparatus of the present disclosure.
[fig.4]FIG. 4 is a schematic view illustrating another example of a cleaning mechanism of a three-dimensional object producing apparatus of the present disclosure.
[fig.5]FIG. 5 is a schematic view illustrating another example of a cleaning mechanism of a three-dimensional object producing apparatus of the present disclosure.
[fig.6]FIG. 6 is a schematic view illustrating an example of a three-dimensional object producing apparatus of the present disclosure.

### Description of Embodiments

### (Three-dimensional object producing apparatus and three-dimensional object producing method)

A three-dimensional object producing apparatus of the present disclosure includes a first removing unit configured to remove part of at least one of a model material for forming an object forming layer and a support material, a second removing unit configured to scrape away at least one of the model material and the support material attached on the first removing unit, and a third removing unit configured to remove at least one of the model material and the support material attached on the second removing unit, and further includes other units as needed.

A three-dimensional object producing method of the present disclosure produces an object using the three-dimensional object producing apparatus of the present disclosure.

According to existing techniques, as illustrated in FIG. 1 and FIG. 2, an object forming material in a liquid state may overflow along the contact surface between the roller main body 2 and the fixed blade 4 and reach the side surface of the roller 2, to contaminate an object surface and generate an object production defect. Moreover, due to degradation of the performance of the fixed blade 4 to scrape away the object forming material attached on the roller 2, the surface of the roller 2 is coated with the object forming material. This may contaminate the object surface and generate an object production defect.

Countermeasures for these problems include use of a low-viscosity object forming material that easily flows downward in order to prevent accumulation of the object forming material over the blade, use of an object forming material containing a solvent having a high boiling point, light blocking for preventing thickening of an excessive object forming material, building a low-humidity environment, setting roller press pressure conditions that suppress generation of a solid-state excessive object forming material, and finding a combination of object forming materials free of thickening due to mixing of a model material and a support material. However, these countermeasures have problems such as limited options of object forming materials and difficulty with optimization of process conditions.

Because the present disclosure includes a first removing unit configured to remove part of at least one of a model material for forming an object forming layer and a support material, a second removing unit configured to scrape away at least one of the model material and the support material attached on the first removing unit, and a third removing unit configured to remove at least one of the model material and the support material attached on the second removing unit, the present disclosure can securely prevent an object forming material collected by, for example, a roller serving as a flattening unit from adhering to the roller, and can produce a high-quality three-dimensional object free of a streaky defect and surface contamination.

In an embodiment of the present disclosure, the third removing unit includes a rotating blade that is configured to scrape away at least one of the model material and the support material attached on the second removing unit.

With the rotating blade provided as the third removing unit configured to remove an object forming material attached on the second removing unit, the second removing unit is cleaned at regular intervals. This makes it possible to prevent contamination of an object surface and enable safe and sound object production with an improved object production accuracy.

A preferred embodiment further includes a rod-shaped or plate-shaped counter member configured to scrape away at least one of the model material and the support material attached on the rotating blade.

By the object forming material that is attached on the rotating blade being scraped away by the rod-shaped or plate-shaped counter member configured to scrape away the object forming material attached on the rotating blade, it is possible to clean the rotating blade, prevent contamination of an object surface, and enable safe and sound object production with an improved object production accuracy.

In another embodiment of the present disclosure, the third removing unit is a nozzle configured to suction at least one of the model material and the support material attached on the second removing unit.

With a suction nozzle provided as the third removing unit configured to remove an object forming material attached on the second removing unit, the second removing unit is cleaned at regular intervals. This makes it possible to prevent contamination of an object surface and enable safe and sound object production with an improved object production accuracy.

In another embodiment of the present disclosure, the third removing unit is a unit configured to discharge a cleaning liquid toward the second removing unit.

With the unit, which is configured to discharge a cleaning liquid, provided as the third removing unit configured to remove an object forming material attached on the second removing unit, the second removing unit is cleaned at regular intervals. This makes it possible to prevent contamination of an object surface and enable safe and sound object production with an improved object production accuracy.

In an embodiment of the present disclosure, the model material is a hydrogel precursor liquid. According to existing techniques, in the case where the model material is a hydrogel precursor liquid, when the model material is collected by a flattening unit such as a roller after a liquid film of the model material is formed, the viscosity of the collected model material rises due to, for example, drying. As a result, problems such as significant influence on the object production accuracy occur because the collected model material adheres to, for example, the roller to make the roller unable to sufficiently perform flattening and the model material that should have been collected has not flowed into a collection device but has returned to the liquid film and re-attaches to the liquid film.

In the present disclosure, even when an ink such as a hydrogel precursor liquid that tends to thicken due to, for example, drying is used as the model material, the third removing unit cleans the fixed blade at regular intervals. This makes it possible to prevent contamination of an object surface and enable safe and sound object production with an improved object production accuracy.

### <First removing unit>

The first removing unit is a unit configured to remove part of at least one of a model material for forming an object forming layer and a support material.

The first removing unit corresponds to a flattening unit. Examples of the first removing unit include a roller and a caterpillar.

For example, the shape, material, size, and structure of the roller are not particularly limited and may be appropriately selected depending on the intended purpose

The material of the roller is not particularly limited and may be appropriately selected depending on the intended purpose. Examples of the material of the roller include metals and elastic materials such as polyurethane rubbers and polyurethane elastomers.

In the present disclosure, an "object forming layer" refers to a layer formed by applying an object forming material in a layer form and flattening and curing the object forming material.

The "object forming material" refers to a material discharged from a discharging unit during production of an object. Typical examples of the object forming material include a model material for forming a three-dimensional object per se, and a support material used when forming an overhang portion and a detail portion. In the present disclosure, an object forming layer formed with a model material may be referred to particularly as "model layer", and an object forming layer formed with a support material may be referred to particularly as "support layer".

The model material is an object forming material that forms a part constituting a model part.

In the present disclosure, a model part refers to a part constituting a main body that forms a three-dimensional object. A model part is formed by lamination of model layers.

In the present disclosure, a support part refers to a part that supports a three-dimensional object at a predetermined position until a model part solidifies. A support part is formed by lamination of support layers. A support part refers to a part that is disposed at a position for supporting a model part against a gravitational direction, and contacts the model part and supports the model part from below the model part. During production of a three-dimensional object, typically, a support part is finally detached from a model part and the model part alone constitutes a three-dimensional object.

In a preferred embodiment, a support material is a different material (e.g., composition and concentration) from a model material, and it is more preferable that a cured product of the support material have a property easily detachable from a model part, such as water solubility, deliquescency, and disintegrability.

The object forming material is not particularly limited and may be appropriately selected depending on the intended purpose so long as the object forming material is a liquid material that cures by application of energy such as light and heat. The object forming material contains a polymerizable monomer and a polymerizable oligomer, and further contains other components as needed. Among such components, a material that has liquid properties such as viscosity and surface tension that enable the material to be discharged from an object forming material discharging head used in, for example, an object forming material jet printer is preferable.

### -Polymerizable monomer-

Examples of the polymerizable monomer include monofunctional monomers and multifunctional monomers. One of these polymerizable monomers may be used alone or two or more of these polymerizable monomers may be used in combination.

### --Monofunctional monomer--

Examples of the monofunctional monomer include acrylamide, N-substituted acrylamide derivatives, N,N-disubstituted acrylamide derivatives, N-substituted methacrylamide derivatives, N,N-disubstituted methacrylamide derivatives, and acrylic acid. One of these monofunctional monomers may be used alone or two or more of these monofunctional monomers may be used in combination. Among these monofunctional monomers, acrylamide, N,N-dimethyl acrylamide, N-isopropyl acrylamide, acryloylmorpholine, hydroxyethyl acrylamide, and isobornyl acrylate are preferable.

The content of the monofunctional monomer is not particularly limited, may be appropriately selected depending on the intended purpose, and is preferably 0.5% by mass or greater but 90% by mass or less relative to the total amount of the object forming material.

Monofunctional monomers other than those described above are not particularly limited and may be appropriately selected depending on the intended purpose. Examples of other monofunctional monomers include 2-ethylhexyl (meth)acrylate, 2-hydroxyethyl (meth)acrylate, 2-hydroxypropyl (meth)acrylate, caprolactone-modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonylphenol (meth)acrylate. One of these monofunctional monomers may be used alone or two or more of these monofunctional monomers may be used in combination.

### --Multifunctional monomer--

The multifunctional monomer is not particularly limited and may be appropriately selected depending on the intended purpose. Examples of the multifunctional monomer include bifunctional monomers and trifunctional or higher monomers. One of these multifunctional monomers may be used alone or two or more of these multifunctional monomers may be used in combination.

Examples of the bifunctional monomer include tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate. One of these bifunctional monomers may be used alone or two or more of these bifunctional monomers may be used in combination.

Examples of the trifunctional or higher monomer include trimethylolpropane tri(meth)acrylate, pentaerythritol tri(meth)acrylate, dipentaerythritol hexa(meth)acrylate, triallyl isocyanurate, ε-caprolactone-modified dipentaerythritol tri(meth)acrylate, ε-caprolactone-modified dipentaerythritol tetra(meth)acrylate, ε-caprolactone-modified dipentaerythritol penta(meth)acrylate, ε-caprolactone-modified dipentaerythritol hexa(meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxypenta(meth)acrylate, ethoxylated pentaerythritol tetra(meth)acrylate, and penta(meth)acrylate ester. One of these trifunctional or higher monomers may be used alone or two or more of these trifunctional or higher monomers may be used in combination.

### --Polymerizable oligomer--

As the polymerizable oligomer, one alone or two or more in combination may be used among low polymers of the above-described monofunctional monomers and the above-described monofunctional monomers containing a reactive unsaturated linking group at an end.

### --Other components--

Other components are not particularly limited and may be appropriately selected depending on the intended purpose. Examples of the other components include a surfactant, a polymerization inhibitor, a polymerization initiator, a colorant, a viscosity modifier, a tackifier, an antioxidant, an age resistor, a cross-linking promoter, an ultraviolet absorbent, a plasticizer, a preservative, and a dispersant.

The three-dimensional object producing apparatus and the three-dimensional object producing method of the present disclosure are particularly effective when a hydrogel precursor liquid is used as the object forming material.

-Hydrogel precursor liquid-

A hydrogel precursor liquid contains water and a hydrogel precursor, preferably further contains a water-dispersible mineral, and further contains other components as needed.

### --Water--

As the water, for example, pure water such as ion-exchanged water, ultrafiltrated water, reverse osmotic water, and distilled water and ultrapure water can be used. Other components such as an organic solvent may be dissolved or dispersed in the water with a view to, for example, imparting a water retaining property, imparting an antibacterial property, imparting electric conductivity, and adjusting hardness.

### --Hydrogel precursor--

A hydrogel precursor contains a polymerizable monomer that can polymerize by irradiation with active energy rays (e.g., ultraviolet rays) and form a polymer having a three-dimensional network structure. Hence, when the hydrogel precursor liquid is irradiated with active energy rays, water serving as the solvent is absorbed into the three-dimensional network structure of the polymer, to form a hydrogel.

The polymerizable monomer may be the same as those described above. Examples of the polymerizable monomer include acrylamide, N-substituted acrylamide derivatives, N,N-disubstituted acrylamide derivatives, N-substituted methacrylamide derivatives, and N,N-disubstituted methacrylamide derivatives. Specific examples of the polymerizable monomer include acrylamide, N,N-dimethylacrylamide, and N-isopropylacrylamide. One of these polymerizable monomers may be used alone or two or more of these polymerizable monomers may be used in combination. In an embodiment, the monofunctional monomer and the multifunctional monomer are used in combination.

When the polymerizable monomer is polymerized, a water-soluble organic polymer containing, for example, an amide group, an amino group, a hydroxyl group, a tetramethyl ammonium group, a silanol group, and an epoxy group is obtained. The water-soluble organic polymer containing, for example, an amide group, an amino group, a hydroxyl group, a tetramethyl ammonium group, a silanol group, and an epoxy group is an advantageous constituent for maintaining the strength of a water-based gel.

The content of the polymerizable monomer is not particularly limited and may be appropriately selected depending on the intended purpose, and is preferably from 0.5% by mass through 20% by mass relative to the total amount of the hydrogel precursor liquid.

### --Water-dispersible mineral--

The water-dispersible mineral is not particularly limited and may be appropriately selected depending on the intended purpose. Examples of the water-dispersible mineral include layered clay minerals.

The layered clay mineral is a clay mineral having a layered crystalline structure. The layered clay mineral is desirably a material dispersible in water uniformly at a primary crystal level. Examples of the layered clay mineral include water-swellable smectite and water-swellable mica. More specific examples of the layered clay mineral include water-swellable hectorite containing sodium as interlayer ions, water-swellable mont-morillonite, water-swellable saponite, and water-swellable synthetic mica.

As the layered clay mineral, one alone or two or more in combination may be used among those described above, or an appropriately synthesized product or a commercially available product may be used.

Examples of the commercially available product include synthetic hectorite (LAPONITE XLG, available from Rock Wood), SWN (available from Coop Chemical Ltd.), and fluorinated hectorite SWF (available from Coop Chemical Ltd).

The content of the water-dispersible mineral is not particularly limited, may be appropriately selected depending on the intended purpose, and is preferably from1% by mass or greater but 40% by mass or less relative to the total amount of the hydrogel precursor liquid.

### --Other components--

Other components are not particularly limited and may be appropriately selected depending on the intended purpose.

Examples of the other components include a stabilizer, a surface treating agent, a photopolymerization initiator, a colorant, a viscosity modifier, a tackifier, an antioxidant, an age resistor, a cross-linking promoter, an ultraviolet absorbent, a plasticizer, a preservative, and a dispersant.

The stabilizer is used to stabilize dispersion of the water-swellable layered clay mineral and maintain a sol state. In an inkjet method, the stabilizer is used as needed in order to stabilize liquid properties.

Examples of the stabilizer include high-concentration phosphates, glycol, and nonionic surfactants.

Examples of the surface treating agent include polyester resins, polyvinyl acetate resins, silicone resins, coumarone resins, aliphatic acid esters, glyceride, and waxes.

### <Second removing unit>

The second removing unit is a unit configured to scrape away at least one of the model material and the support material attached on the first removing unit.

Examples of the second removing unit include a fixed blade.

The fixed blade is fixed in a manner that the fixed blade can scrape away the object forming material attached on the first removing unit. For example, the shape, material, size, and structure of the fixed blade are not particularly limited and may be appropriately selected depending on the intended purpose.

Examples of the shape of the fixed blade include a flat plate shape, a strip shape, and a sheet shape.

The size of the fixed blade is not particularly limited and may be appropriately selected depending on the size of the roller serving as the first removing unit.

The material of the fixed blade is not particularly limited and may be appropriately selected depending on the intended purpose. For example, metals and resins are suitable because a high elasticity can be obtained.

### <Third removing unit>

The third removing unit is a unit configured to remove at least one of the model material and the support material attached on the second removing unit. The third removing unit may be referred to as "cleaning mechanism".

Examples of the third removing unit include a rotating blade, a suction nozzle, and a cleaning liquid discharging unit.

For example, the shape, material, size, and structure of the rotating blade are not particularly limited and may be appropriately selected depending on the intended purpose so long as the rotating blade can remove at least one of the model material and the support material attached on the second removing unit.

Examples of the shape of the rotating blade include a flat plate shape, a strip shape, and a sheet shape.

The size of the rotating blade is not particularly limited and may be appropriately selected depending on the size and position of the second removing unit.

The material of the rotating blade is not particularly limited and may be appropriately selected depending on the intended purpose. Examples of the material of the rotating blade include nitrile rubbers, silicone rubbers, fluorine rubbers, and urethane rubbers because these rubbers can impart flexibility. Among these rubbers, fluorine rubbers are preferable in terms of solvent resistance.

Examples of the rotating blade include a combination of a rotating blade with a shaft for scraping or a blade for scraping.

Mounting the rotating blade on a rotating shaft and bringing the rotating blade into a rotary contact with the fixed blade enables the rotating blade to scrape away any excessive object forming material attached on the fixed blade at any time.

When the cleaning mechanism is a rotating blade, a preferred embodiment further includes a counter member configured to remove the object forming material (a model material or a support material, or both) attached on the rotating blade. The counter member needs at least to be a structure capable of removing the object forming material from the rotating blade, and may be, for example, a rod shape or a plate shape.

The suction nozzle needs at least to be capable of suctioning a liquid. Examples of the suction nozzle include a structure in which a negative pressure forming pump is coupled to a tubular structural body having a single hole or a plurality of holes. In order to prevent clogging of the holes, holes having a larger diameter are preferred.

The cleaning liquid discharging unit is not particularly limited and may be appropriately selected depending on the intended purpose so long as the cleaning liquid discharging unit is a tubular structure that can discharge a liquid injected into the tubular structure at a positive pressure. Examples of the cleaning liquid discharging unit include a shower nozzle having a plurality of discharging holes, and a single nozzle having a single discharging hole.

The cleaning liquid is preferably a solvent that can mix with at least one of the model material and the support material, and a solvent having a low viscosity and a relatively high boiling point is more preferable. Examples of the cleaning liquid include water, alcohols such as 1-pentanol, 2-ethylhexanol, 2,3-butanediol, 1,3-butanediol, and 3-methyl-1,3-butanediol, glycols such as ethylene glycol and propylene glycol, and glycol ethers such as diethylene glycol ethyl methyl ether, diethylene glycol dimethyl ether, and propylene glycol monomethyl ether acetate.

### <Other units>

Other units are not particularly limited and may be appropriately selected depending on the intended purpose. Examples of the other units include a discharging unit, a curing unit, and a control unit.

### -Discharging unit-

The discharging unit is not particularly limited and may be appropriately selected depending on the intended purpose so long as the discharging unit can discharge the object forming material. Examples of the discharging unit include a discharging head.

The discharging head is not particularly limited and may be appropriately selected depending on the intended purpose. Examples of the discharging head include a piezoelectric element (piezo element) type head, and a thermally expansible (thermal) head. Of these discharging heads, a piezoelectric element (piezo element) type head is preferable.

### -Curing unit-

The curing unit is not particularly limited and may be appropriately selected depending on the intended purpose so long as the curing unit can cure the object forming material discharged. Examples of the curing unit include an ultraviolet irradiator.

Examples of the ultraviolet irradiator include a light-emitting diode (LED), a highpressure mercury lamp, an ultrahigh-pressure mercury lamp, and a metal halide. Among these ultraviolet irradiators, a LED is particularly preferable because the irradiation intensity of the LED can be changed.

An ultrahigh-pressure mercury lamp is a point light source. A Deep UV type combined with an optical system to improve light utilization efficiency can emit short wavelength ranges.

A metal halide is effective for colored matters because the metal halide has a broad wavelength range. A halide of a metal such as Pb, Sn, and Fe is used as the metal halide. Metals can be selected depending on the absorption spectrum of a polymerization initiator. The lamp used for curing is not particularly limited and may be appropriately selected depending on the intended purpose. For example, commercially available lamps such as H LAMP, D LAMP, and V LAMP available from Fusion Systems Japan Co., Ltd. can be used.

### -Control unit-

The control unit is a unit configured to control operations of, for example, the first removing unit, the second removing unit, the third removing unit, the discharging unit, and the curing unit. The control unit may include a memory unit such as a ROM and a RAM, and a calculating unit such as a CPU and a FPGA. The memory unit may store a program for causing each of, for example, the discharging unit and the curing unit to perform specific operations. The control unit controls operations of each unit based on such a program.

Embodiments of the three-dimensional object producing apparatus of the present disclosure will be described with reference to the drawings.

### <First embodiment>

FIG. 3 is a schematic view illustrating an example of the cleaning mechanism of the three-dimensional object producing apparatus of the present disclosure.

In the first embodiment, a rotating blade 11 is disposed rotatable about a rotation shaft 13 with respect to a fixed blade 4.

Bringing the rotating blade 11 into a rotary contact with the fixed blade 4 enables the rotating blade 11 to scrape away any excessive object forming material attached on the fixed blade 4 at any time.

The rotating blade is formed of a fluorine rubber material having flexibility.

The rotation direction of the rotating blade 11 in which the rotating blade scrapes away any excessive material is preferably a top-down direction or a bottom-up direction with respect to the fixed blade 4. The direction in which the rotating blade 11 is brought into contact is preferably a reverse rotating direction from the roller 2 because the rotating blade 11 is less likely to be stuck in the roller 2.

It is preferable that the roller 2, the fixed blade 4, and the rotating blade 11 be longer than an object production width of inkjet nozzles. The reason is as follows. Because any excessive object forming material transferred by the roller 2 spreads over the blade 4, the excessive object forming material can be scraped away more stably when the roller 2, the fixed blade 4, and the rotating blade 11 are longer in the object production width direction. Specifically, it is preferable that the longer dimension of the roller 2, the fixed blade 4, and the rotating blade 11 has 30 mm or greater margins on both sides of the object production width. It is more preferable that the roller 2, the fixed blade 4, and the rotating blade 11 have the same length as the width of an object production stage.

During object production, the rotating blade 11 may perform the scraping operation without suspension of the object production process, or a timing for cleaning may be separately provided with suspension of the object production process. The rotating operation needed for scraping may be incorporated as a set including a few times of rotations up to constant rotation in an arbitrary rotation direction. Constant rotation without suspension of the object production operation is preferable because this realizes efficient cleaning.

A shaft 12 for scraping is disposed at a position at which the shaft 12 has a counter contact with the fixed blade 4, in order to remove an object forming material attached on the rotating blade 11. A blade for scraping may be used instead of the shaft 12 for scraping.

When the rotating blade 11 contacts the shaft 12 for scraping, any excessive object forming material attached on the rotating blade 11 is removed by the shaft 12 for scraping and falls into the receptacle 5 at any time. A plurality of shafts 12 for scraping may be disposed with respect to the rotating blade 11.

These operations can prevent adhesion of the object forming material to the roller 2 and the fixed blade 4 and contamination of an object surface.

### <Second embodiment>

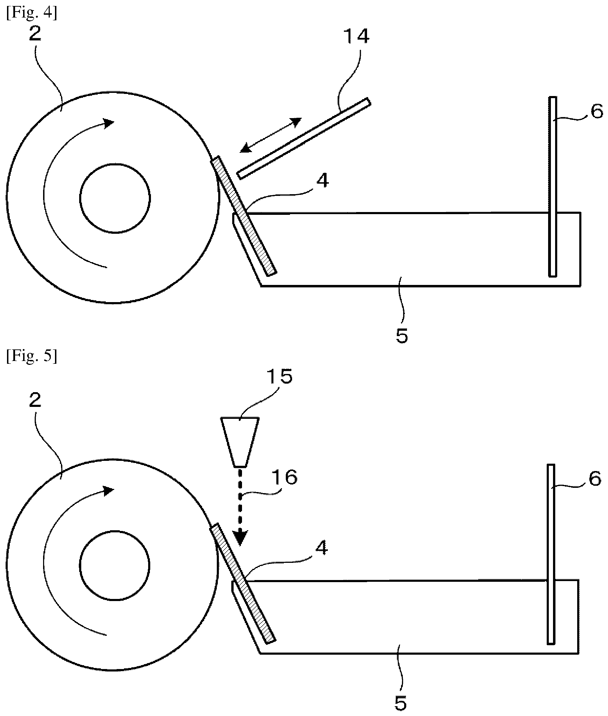

FIG. 4 is a schematic view illustrating an example of a cleaning mechanism of the three-dimensional object producing apparatus of the second embodiment.

In the second embodiment, a suction nozzle 14 configured to suction any excessive object forming material attached on the surface of the fixed blade 4 is disposed with respect to the fixed blade 4. This makes it possible to suppress accumulation of the excessive object forming material over the fixed blade 4.

Examples of the suction nozzle 14 that can be used include a type having a plurality of suction holes formed in a pipe having a length equal to the longer dimension of the fixed blade 4, and a type having a single suction nozzle slidable along such a pipe.

The suction operation is performed by maintaining the suction nozzle 14 and the fixed blade 4 at a certain gap, and bringing the suction nozzle 14 into contact with the fixed blade 4 to make the suction nozzle 14 suction the object forming material attached on the fixed blade 4.

### <Third embodiment>

FIG. 5 is a schematic view illustrating an example of a cleaning mechanism of the three-dimensional object producing apparatus of the third embodiment.

In the third embodiment, a shower nozzle 15 serving as a cleaning liquid discharging unit discharges a cleaning liquid (ethylene glycol) 16 toward the fixed blade 4 to remove any excessive object forming material on the fixed blade 4. This makes it possible to suppress accumulation of the excessive object forming material over the fixed blade 4.

Examples of the cleaning liquid discharging unit include a type having an outlet and a type having a single slidable nozzle.

Cleaning by the shower nozzle 15 may be performed without suspension of the object production process, or a timing for cleaning may be separately provided with suspension of object production. Constant cleaning without suspension of the object production operation is preferable because this realizes efficient cleaning by continuous rotation of the roller 2.

### Examples

The present disclosure will be described by way of Examples. The present disclosure should not be construed as being limited to these Examples.

### <Model material ink preparation example>

In the following description, ion-exchanged water subjected to reduced pressure deaeration for 10 minutes is described as "pure water".

First, an aqueous solution obtained by dissolving 1-hydroxycyclohexyl phenyl ketone [product name: IRGACURE 184] (obtained from BASF Corporation) (2 parts by mass) in pure water (98 parts by mass) was prepared as an initiator liquid.

Next, synthetic hectorite serving as a layered clay mineral (LAPONITE XLG, obtained from Rock Wood) (8 parts by mass) was added little by little into pure water (195 parts by mass) under stirring, and then stirred to produce a dispersion liquid.

Next, N,N-dimethylacrylamide (obtained from Wako Pure Chemical Industries, Co., Ltd.) (20 parts by mass) passed through an activated alumina column to remove a polymerization inhibitor was added as a polymerizable monomer in the dispersion liquid.

Next, sodium dodecyl sulfate (obtained from Wako Pure Chemical Industries, Co., Ltd.) (0.2 parts by mass) was added and mixed in the resultant as a surfactant.

Next, the initiator liquid (5 parts by mass) was added, stirred, and mixed in the resultant, and then the resultant was subjected to reduced pressure deaeration for 10 minutes, to prepare a hydrogel model material ink.

### <Support material ink preparation example>

Dodecyl acrylate (obtained from Tokyo Chemical Industry Co., Ltd.) (29 parts by mass) and stearyl acrylate (obtained from Tokyo Chemical Industry Co., Ltd.) (29 parts by mass) serving as monomers were stirred, and 1-hydroxycyclohexyl phenyl ketone (2 parts by mass) was added and stirred in the resultant as a photopolymerization initiator. Furthermore, 1-dodecanol was added in the resultant, to prepare a support material ink.

### (Example 1)

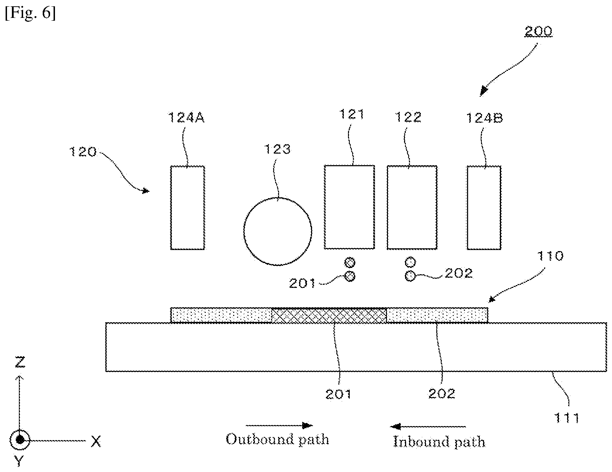

A three-dimensional object producing apparatus 200 illustrated in FIG. 6 includes an object production stage 111 over which a three-dimensional object 110 is placed, and an object production unit 120 configured to produce an object by sequentially laminating layers of objects 110 over the object production stage 111.

The object production stage 111 is configured to be movable in the X direction, the Y direction, and the Z direction. The object production unit 120 may be configured to be movable in the X direction. This can realize an object producing operation in the outbound and inbound paths.

As a discharging unit, the object production unit 120 includes a first head 121 serving as a discharging unit configured to discharge a model material in 201 and a second head 122 serving as a discharging unit configured to discharge a support material ink 202.

The object production unit 120 includes a flattening roller 123 serving as a flattening unit configured to flatten each of the model material ink 201 and the support material ink 202 discharged, and two UV irradiation units 124A and 124B configured to cure each of the model material ink 201 and the support material ink 202 by irradiation with ultraviolet rays as active energy rays.

Here, the flattening roller 123 is disposed at the upstream of the first head 121 and the UV irradiation unit 124A is disposed at the upstream of the flattening roller 123 when it is assumed that the object production stage 111 moves in the outbound path direction in the X direction. Likewise, the second head 122 is disposed at the downstream of the first head 121 and the UV irradiation unit 124B is disposed at the downstream of the second head 122.

In Example 1, the cleaning mechanism including the rotating blade illustrated in FIG. 3 was installed in the three-dimensional object producing apparatus illustrated in FIG. 6, and a three-dimensional object having a size of 30 mm × 30 mm × 100 mm was produced using the model material ink and the support material ink described above. A support part was disposed to adjoin a model part.

Presence or absence of a streaky defect and surface contamination on the obtained three-dimensional object was evaluated according to the criteria described below. The result is presented in Table 1.

### <Evaluation test>

### <Evaluation criteria>

A: At least one of a streaky defect and surface contamination was absent on the model part and the support part.
B: A streaky defect and surface contamination were present on the model part and the support part.

### (Example 2)

A three-dimensional object was produced in the same manner as in Example 1 except that unlike in Example 1, the cleaning mechanism including the suction nozzle 14 illustrated in FIG. 4 was installed in the three-dimensional object producing apparatus illustrated in FIG. 6.

Presence or absence of a streaky defect and surface contamination on the obtained three-dimensional object was evaluated in the same manner as in Example 1. The result is presented in Table 1.

### (Example 3)

A three-dimensional object was produced in the same manner as in Example 1 except that unlike in Example 1, the cleaning mechanism including the shower nozzle 15 illustrated in FIG. 5 as a cleaning liquid discharging unit was installed in the three-dimensional object producing apparatus illustrated in FIG. 6.

Presence or absence of a streaky defect and surface contamination on the obtained three-dimensional object was evaluated in the same manner as in Example 1. The result is presented in Table 1.

### (Comparative Example 1)

A three-dimensional object was produced in the same manner as in Example 1 except that unlike in Example 1, a three-dimensional object producing apparatus obtained by removing the cleaning mechanism from the three-dimensional object producing apparatus including the cleaning mechanism illustrated in FIG. 3 was used.

Presence or absence of a streaky defect and surface contamination on the obtained three-dimensional object was evaluated in the same manner as in Example 1. The result is presented in Table 1.

**[Table 1]**

| | Ex. 1 | Ex. 2 | Ex. 3 | Comp. Ex. 1 (No cleaning mechanism) |
|---|---|---|---|---|
| Evaluation result | A | A | A | B |

From the results of Table 1, it was revealed that Examples 1 to 3 including the cleaning mechanisms illustrated in FIG. 3 to FIG. 5 prevented generation of an object production defect and surface contamination better than Comparative Example 1 including no cleaning mechanism.

### Reference Signs List

- 1:: object production substrate
- 2:: roller
- 3:: roller unit
- 4:: fixed blade
- 5:: receptacle
- 6:: suction pipe
- 11:: rotating blade
- 12:: shaft for scraping
- 14:: suction nozzle
- 15:: shower nozzle
- 16:: cleaning liquid

## Claims

1. A three-dimensional object producing apparatus comprising:
a first removing unit configured to remove part of at least one of a model material and a support material (202) both of which form an object forming layer;
a second removing unit configured to scrape away at least one of the model material and the support material attached on the first removing unit; **characterised by**
a third removing unit configured to remove at least one of the model material and the support material attached on the second removing unit, wherein the third removing unit comprises a rotating blade (11)
configured to scrape away at least one of the model material and the support material attached on the second removing unit.

2. The three-dimensional object producing apparatus according to claim 1, further comprising
a rod-shaped or plate-shaped counter member configured to scrape away at least one of the model material and the support material attached on the rotating blade.

3. The three-dimensional object producing apparatus according to claim 1 or claim 2, wherein the model material is a hydrogel precursor liquid.

4. A three-dimensional object producing method comprising
producing an object using the three-dimensional object producing apparatus according to any one of claims 1 to 3.

## Patentansprüche

1. Vorrichtung zum Herstellen eines dreidimensionalen Objekts, die Folgendes umfasst:
eine erste Entfernungseinheit, die dafür konfiguriert ist, einen Teil von mindestens einem von einem Modellmaterial und einem Stützmaterial (202) zu entfernen, von denen beide eine Objektbildungsschicht bilden;
eine zweite Entfernungseinheit, die dafür konfiguriert ist, mindestens eines von dem Modellmaterial und dem Stützmaterial, die an der ersten Entfernungseinheit angebracht sind, abzukratzen; **gekennzeichnet durch**
eine dritte Entfernungseinheit, die dafür konfiguriert ist, mindestens eines von dem Modellmaterial und dem Stützmaterial, die an der zweiten Entfernungseinheit angebracht sind, zu entfernen, wobei die dritte Entfernungseinheit eine sich drehende Klinge (11) umfasst, die dafür konfiguriert ist, mindestens eines von dem Modellmaterial und dem Stützmaterial, die an der zweiten Entfernungseinheit angebracht sind, abzukratzen.

2. Vorrichtung zum Herstellen eines dreidimensionalen Objekts nach Anspruch 1, die ferner Folgendes umfasst:
ein stabförmiges oder plattenförmiges Gegenelement, das dafür konfiguriert ist, mindestens eines von dem Modellmaterial und dem Stützmaterial, die an der sich drehenden Klinge angebracht sind, abzukratzen.

3. Vorrichtung zum Herstellen eines dreidimensionalen Objekts nach Anspruch 1 oder Anspruch 2, wobei das Modellmaterial eine Hydrogelvorläufer-Flüssigkeit ist.

4. Verfahren zum Herstellen eines dreidimensionalen Objekts, welches Folgendes umfasst:
Herstellen eines Objekts unter Verwendung der Vorrichtung zum Herstellen eines dreidimensionalen Objekts nach einem der Ansprüche 1 bis 3.

## Revendications

1. Appareil de production d'objet tridimensionnel, comprenant :
une première unité d'enlèvement configurée pour enlever une partie d'au moins l'un d'un matériau de modèle et d'un matériau de support (202), dont les deux forment une couche de formation d'objet ;
une deuxième unité d'enlèvement configurée pour enlever par raclage au moins l'un du matériau de modèle et du matériau de support fixés sur la première unité d'enlèvement ; **caractérisé par**
une troisième unité d'enlèvement configurée pour enlever au moins l'un du matériau de modèle et du matériau de support fixés sur la deuxième unité d'enlèvement, dans lequel la troisième unité d'enlèvement comprend une lame rotative (11), configurée pour enlever par raclage au moins l'un du matériau de modèle et du matériau de support fixés sur la deuxième unité d'enlèvement.

2. Appareil de production d'objet tridimensionnel selon la revendication 1, comprenant en outre :
un contre-élément en forme de tige ou en forme de plaque configuré pour enlever par raclage au moins l'un du matériau de modèle et du matériau de support fixés sur la lame rotative.

3. Appareil de production d'objet tridimensionnel selon la revendication 1 ou la revendication 2, dans lequel le matériau de modèle est un liquide précurseur d'hydrogel.

4. Procédé de production d'objet tridimensionnel comprenant :
la production d'un objet en utilisant l'appareil de production d'objet tridimensionnel selon l'une quelconque des revendications 1 à 3.
